# EUROPÄISCHE PATENTANMELDUNG

(11) **EP 2 082 912 A2**
(43) Veröffentlichungstag der Anmeldung: **29.07.2009**
(21) Anmeldenummer: 08020201.3
(22) Anmeldetag: 20.11.2008
(51) Int. Cl.: B60J 7/20

(54) **Cabriolet-Fahrzeug mit einem auf- und zubeweglichen Deckelteil**

(30) Priorität: 22.01.2008 DE 102008005602
(71) Anmelder: Wilhelm Karmann GmbH, 49084 Osnabrück (DE)
(72) Erfinder: Meinert, Stefan, 49143 Wallenhorst (DE)

(57) **Zusammenfassung**

Ein Cabriolet-Fahrzeug (1) mit einem auf- und zubeweglichen Deckelteil zur zumindest teilweisen Abdeckung eines karosserieseitigen Aufnahmeraums für ein in eine Offenstellung bewegtes Dach oder einen Dachteil des Fahrzeugs, wobei die Auf- und Zubewegung des Deckelteils (3) über zumindest ein in einem Normalbetriebsmodus bewegbares Getriebe (4) vermittelbar ist, das neben seiner Beweglichkeit im Normalbetriebsmodus zumindest für eine Notbetätigung manuell bewegbar ist, wird so ausgebildet, dass das Getriebe (4) im Normalbetriebsmodus zumindest eine Sicherungseinheit (30) umfasst, die eine Bewegung von Teilen (18;20) des Getriebes (4) gegeneinander hemmt, und diese Sicherungseinheit (30) zum Ermöglichen einer manuellen Beweglichkeit des Getriebes (4) aus ihrer im Normalbetriebsmodus hemmenden Funktion entfernbar ist.

## Beschreibung

Die Erfindung betrifft ein Cabriolet-Fahrzeug mit einem auf- und zubewegbaren Deckelteil nach dem Oberbegriff des Anspruchs 1.

Ein solches Deckelteil kann insbesondere in einem ersten Öffnungssinn zur Freigabe einer Durchtrittsöffnung für das Dach und in einem zweiten Öffnungssinn zur Freigabe einer Ladeöffnung für Gepäck aufbewegbar sein, wobei zumindest die Öffnung zur Freigabe der Durchtrittsöffnung für das Dach automatisiert mit Hilfe eines elektrischen oder hydraulischen Antriebs stattfinden kann, der über zumindest ein - in der Regel zwei seitliche - Getriebe die Deckelteilbewegung bewirkt. Ein solches Getriebe bildet für einen einfachen, verkantungsfreien Lauf häufig ein Mehrgelenk mit schwenkbaren Gelenken aus.

Um auch bei Ausfall des Antriebs ein Schließen des Deckelteils ermöglichen zu können, ist es erforderlich, neben dem Normalbetriebsmodus auch eine manuelle Bewegung zu ermöglichen. Hierbei stellt sich das Problem, dass das Deckelteil bei einem Ausfall des Antriebs in unterschiedlichen Stellungen stehen kann, auch solche, in denen einzelne Gelenke des Getriebes gegeneinander blockieren, so dass ein manuelles Bewegen des Getriebes je nach dessen momentaner Stellung erschwert oder gar unmöglich sein kann.

Der Erfindung liegt das Problem zugrunde, hier eine Verbesserung zu erreichen.

Die Erfindung löst dieses Problem durch ein Cabriolet-Fahrzeug mit den Maerkmalen des Anspruchs 1. Hinsichtlich vorteilhafter Ausgestaltungen und Weiterbildungen der Erfindung wird auf die Ansprüche 2 bis 15 verwiesen.

Durch die Erfindung kann ein Blockieren oder Hemmen einer Beweglichkeit des Getriebes durch Lösen zumindest einer Sicherungseinheit entschärft werden, so dass die manuelle Beweglichkeit auch aus einer im Normalbetriebsmodus nicht erlaubten Weise ermöglicht ist.

Insbesondere kann die Sicherungseinheit zum Ermöglichen der manuellen Beweglichkeit an eine andere Stelle des Getriebes in eine Hilfsstellung einsetzbar sein und dort eine andere hemmende Funktion ausführen. Damit kann zum Beispiel ein anderes Gelenk gesperrt werden, so dass etwa ein manuelles Überführen des Deckelteils von seiner Öffnung zur Freigabe einer Ladöffnung für Gepäck in eine zweite Öffnungsstellung zur Freigabe einer Durchtrittsöffnung für das Dach ohne den Umweg über die geschlossene Stellung möglich wird. Eine solche Überführungsbewegung wäre im Normalbetriebsmodus üblicherweise ausgeschlossen.

Die Sicherungseinheit kann in ihrer hemmenden Stellung einfach eine vollständige Blockierung einer Schwenkbewegung eines Lenkers oder Lenkerpaars gegeneinander bewirken.

Für eine einfache Handhabung kann die Sicherungseinheit in zumindest eine hemmende Position manuell einschraubbar sein, wobei es besonders günstig ist, um das Getriebe weit nach quer außen legen zu können, wenn die Sicherungseinheit in ihre hemmende Stellung für den Normalbetriebsmodus von quer innen nach außen in das Getriebe einsetzbar ist. Hierfür kann die Sicherungeinheit einen großen Haltekopf umfassen, von dem aus ein Gewindestift zum Einschrauben in eine einen oder mehrere Lenker hintereinander durchdringende Gewindebohrung des Getriebes einschraubbar ist.

Nach Herausdrehen der Sicherungseinheit kann diese von außen in einen anderen Bereich des Getriebes eingeschraubt werden, ohne zum Beispiel den Kofferraum entladen zu müssen.

Weiterhin ist es sehr günstig, wenn allein durch Maßnahmen innerhalb des Getriebes verschiedene Bewegungsmöglichkeiten des Deckelteils durch Vorsehen einer Verzweigungsstellung des Getriebes erreicht sind, bei der immer ein Freiheitsgrad mehr erreicht ist, als sich eigentlich nach Zahl der Gelenke und der Anzahl der Glieder rechnerisch ergibt.

Insbesondere kann das Getriebe außerhalb der blockierenden Verzweigungsstellung einen Gesamtfreiheitsgrad von 1 aufweisen, wobei in der genannten Verzweigungsstellung ein zweiter Freiheitsgrad gewonnen wird. Dadurch sind zwei unterschiedliche Bewegungsabläufe des Flächenteils ermöglicht.

Besonders vorteilhaft sind für einen einfachen Aufbau des Getriebes Kulissen oder weitere Schlösser zur Blockierung der Aufbewegung vollständig entbehrlich.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: den Heckbereich eines erfindungsgemäßen Cabriolet-Fahrzeugs bei geschlossenem Dach in schematischer Seitenansicht, wobei das Flächenteil hier als in zwei Öffnungssinnen aufbewegbares Deckelteil für den Kofferraum und Aufnahmeraum eines Daches ausgebildet und hier in geschlossener Stellung dargestellt ist,
- Fig. 2 bis Fig. 7: die Aufbewegung des Deckelteils zur Freigabe einer Durchtrittsöffnung für das Dach, dargestellt in einer schematischen Seitenansicht nur des hintersten Fahrzeugseitenbereichs hinter dem rückwärtigen Dachende,
- Fig. 8: den Beginn der gegensinnigen Öffnung des Deckelteils aus seiner geschlossenen Position nach Fig. 2 zur Freigabe einer Ladeöffnung für Gepäck in ähnlicher schematischer Seitenansicht wie in Fig. 2,
- Fig. 9: eine ähnliche Ansicht wie Fig. 8 bei weiter fortschreitender Öffnung des Deckelteils zur Freigabe der Ladeöffnung für Gepäck,
- Fig. 10: eine ähnliche Ansicht wie Fig. 9 bei vollständiger Öffnung des Deckelteils im genannten Öffnungssinn,
- Fig. 11: eine perspektivische Ansicht von schräg vorne auf das Getriebe in seiner die Schließstellung des Deckelteils sichernden Stellung nach Fig. 2,
- Fig. 12: eine ähnliche Ansicht wie Fig. 11, jedoch während der Öffnung des Deckelteils zur Freigabe der Durchtrittsöffnung für das Dach, etwa entsprechend der Stellung nach Fig. 3,
- Fig. 13: eine ähnliche Ansicht wie Fig. 12, jedoch bei weiter fortschreitender Deckelteilöffnung im genannten Öffnungssinn, etwa entsprechend der Stellung nach Fig. 4,
- Fig. 14: eine ähnliche Ansicht wie Fig. 13, jedoch bei weiter fortschreitender Deckelteilöffnung im genannten Öffnungssinn, etwa entsprechend der Stellung nach Fig. 6,
- Fig. 15: eine ähnliche Ansicht wie Fig. 14, jedoch bei vollständiger Deckelteilöffnung im genannten Öffnungssinn, etwa entsprechend der Stellung nach Fig. 7,
- Fig. 16: eine ähnliche Ansicht wie Fig. 15, jedoch jetzt bei beginnender gegensinniger Deckelteilöffnung zur Freigabe einer Ladeöffnung für Gepäck, etwa entsprechend der Stellung nach Fig. 8,
- Fig. 17: eine ähnliche Ansicht wie Fig. 16 bei weiter fortschreitender Öffnung im genannten Öffnungssinn, etwa entsprechend der Stellung nach Fig. 7,
- Fig. 18: eine ähnliche Ansicht wie Fig. 10 des vollständig zur Freigabe einer Ladeöffnung für Gepäck geöffneten Deckelteils, jedoch nach Entfernen einer Sicherungseinheit,
- Fig. 19: eine ähnliche Ansicht wie Fig. 18 nach teilweisem manuellen Rückbewegen des Deckelteils, Einsetzen der Sicherungseinheit in ihre Hilfsstellung und Herausziehen des Antriebsorgans, um damit einen Übergang in die gegensinnige Öffnung des Deckelteils zur Freigabe der Durchtrittsöffnung für das Dach einzuleiten,
- Fig. 20: eine ähnliche Ansicht wie Fig. 19 bei weiterem Herausziehen des Antriebsorgans und dadurch weitergehender manueller Überführung des Deckelteils in die Stellung zur Freigabe der Durchtrittsöffnung für das Dach bei in Hilfsstellung eingesetzter Sicherungseinheit,
- Fig. 21: eine ähnliche Ansicht wie Fig. 20 am Ende der Überführungsbewegung des Deckelteils in Richtung der Freigabe der Durchtrittsöffnung für das Dach und Erreichen seiner in diesem Öffnungssinn vollständig geöffneten Stellung entsprechend Fig. 7, jetzt jedoch bei weiterhin in Hilfsstellung verbleibender Sicherungseinheit.

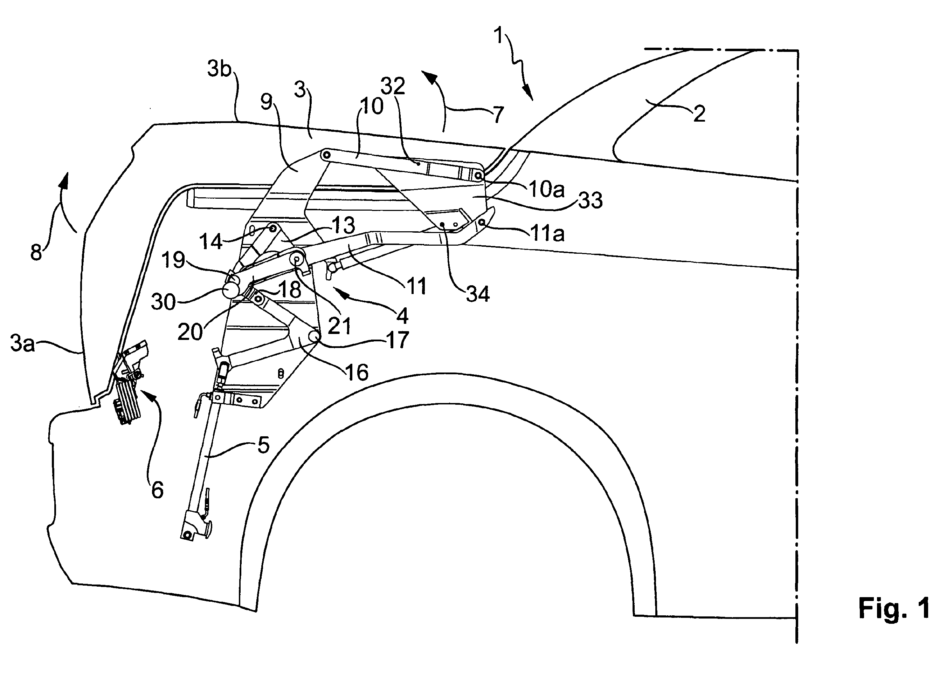

Das erfindungsgemäße Cabriolet-Fahrzeug 1 ist mit einem beweglichen Dach oder zumindest Dachteil 2 versehen (Fig.1) und kann ein mit zumindest einer Rückbank versehenes vieroder mehrsitziges Fahrzeug oder auch ein Zweisitzer sein.

Dargestellt ist in Fig. 1 ein Stufenheckfahrzeug, auch Fahrzeuge mit beispielsweise einem Steilheck oder Schrägheck, wie etwa Kompaktwagen, Kombis, SUVs oder ähnliches, kommen in Betracht.

Das Dach 2 gemäß Fig. 1 kann als ein sog. Retractable Hardtop (RHT) mit festen plattenförmigen Dachaußenteilen ausgebildet sein. Auch eine Dachausbildung mit einem textilen Bezug als sog. Softtop oder eine Mischform ist möglich.

In seinem geöffneten Zustand ist das Dach 2 ganz oder teilweise in einem Aufbewahrungsraum unterhalb eines heckseitigen Deckelteils 3 halterbar. Dieser weist hier einen in seiner Schließstellung im wesentlichen vertikalen Heckteil 3a und einen im wesentlichen horizontalen oberen Abdeckteil 3b auf, so dass er nicht nur zum Abdecken des Aufnahmeraums, sondern auch zum Abdecken eines Kofferraums dient.

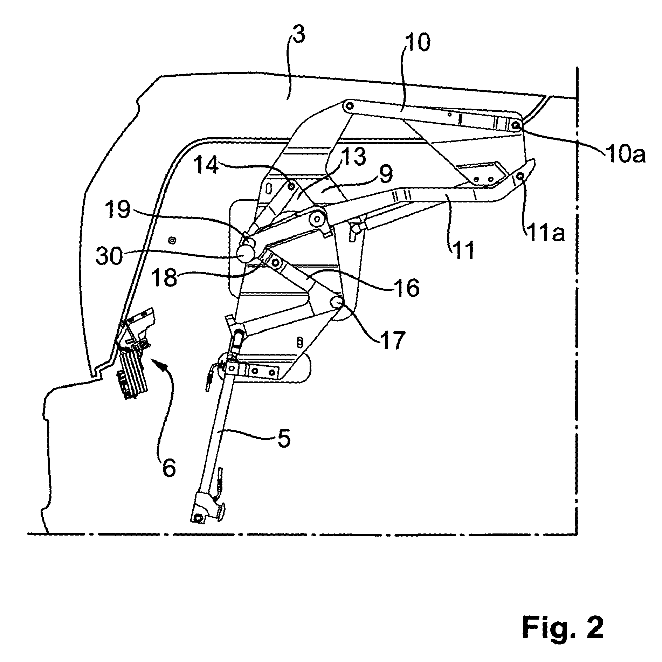

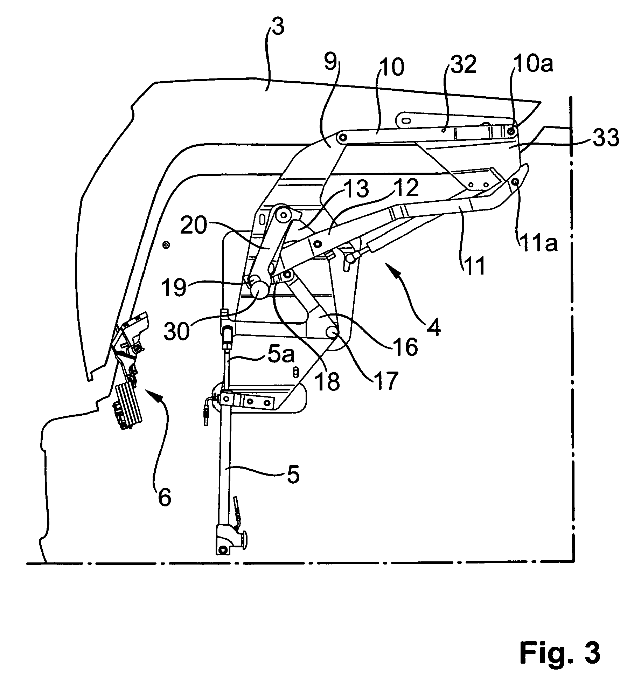

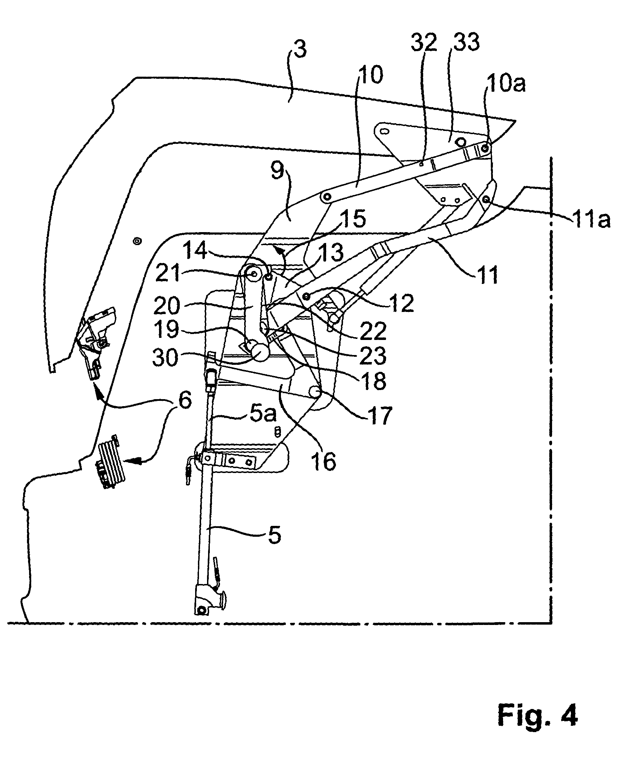

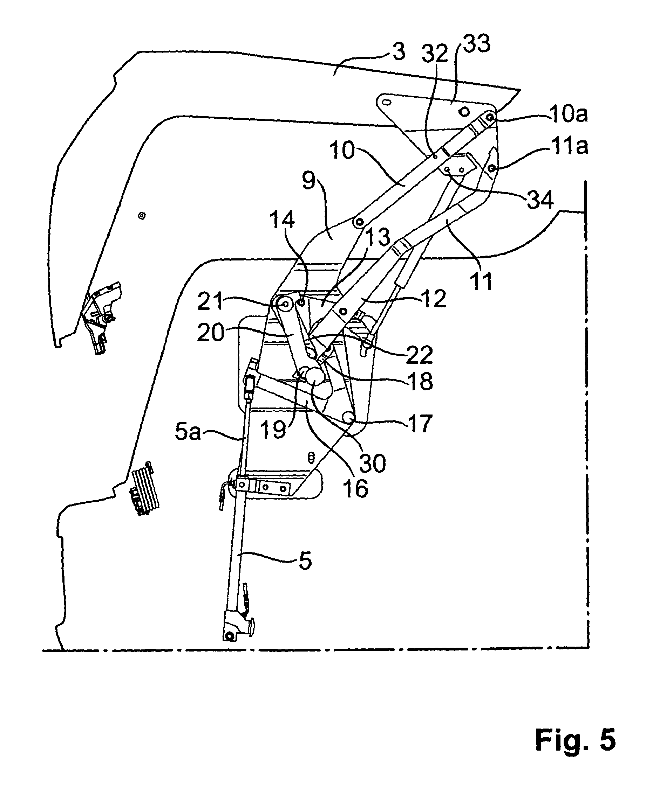

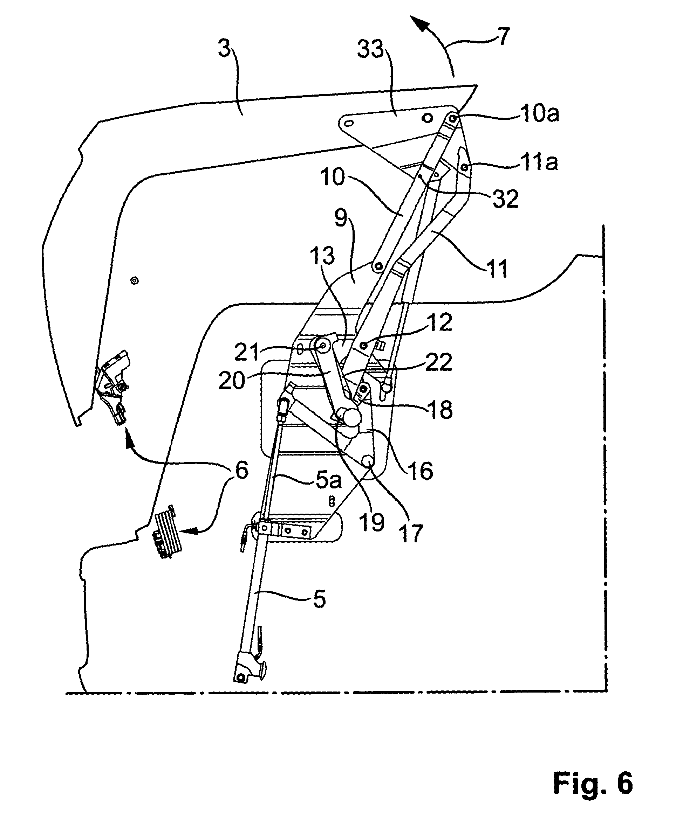

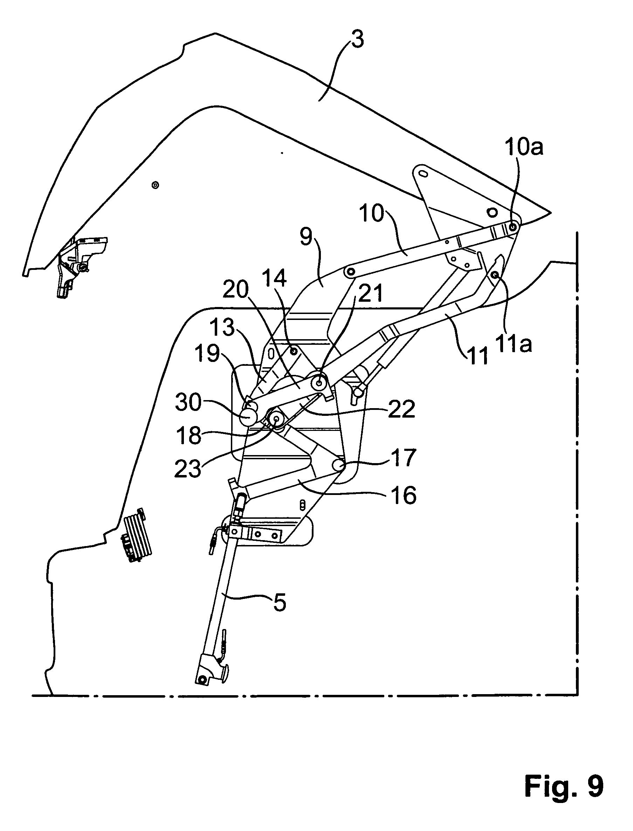

Der Deckelteil 3 ist insgesamt über zumindest ein Getriebe 4 auf- und zubeweglich, wobei in der Regel an jeder Fahrzeugquerseite ein solches Getriebe 4, wie es in Fig. 1 dargestellt ist, vorgesehen ist. Der ein- oder mehrteilige Deckelteil 3 ist gemäß der Zeichnung in seinem Normalbetriebsmodus jeweils aus der Schließstellung heraus in zwei unterschiedlichen Öffnungsbewegungen (Fig. 2 bis Fig. 7 bzw. Fig. 8 bis Fig. 10) aufbeweglich.

Für die insgesamt nach hinten in Richtung des Pfeils 7 öffnende Bewegung zur Freigabe einer Durchtrittsöffnung für das Dach 2 kann das Getriebe 4 von einem Antriebsorgan 5 beaufschlagt werden. Dabei ist der Deckelteil 3 zuvor aus einem heckseitigen Schloss 6 zu lösen.

Für die nach vorne in Richtung des Pfeils 8 öffnende Bewegung zur Freigabe der Ladeöffnung für Gepäck kann der Deckelteil 3 manuell oder von einem weiteren Antrieb bewegbar sein. Auch hier ist zunächst das heckseitige Schloss 6 zu entriegeln, wofür eine Fernbedienung oder eine mit einer Antriebssteuerung zusammenwirkende Automatik vorgesehen sein kann. Der Antrieb 5 bleibt jedoch bei dieser Öffnungsbewegung unbewegt.

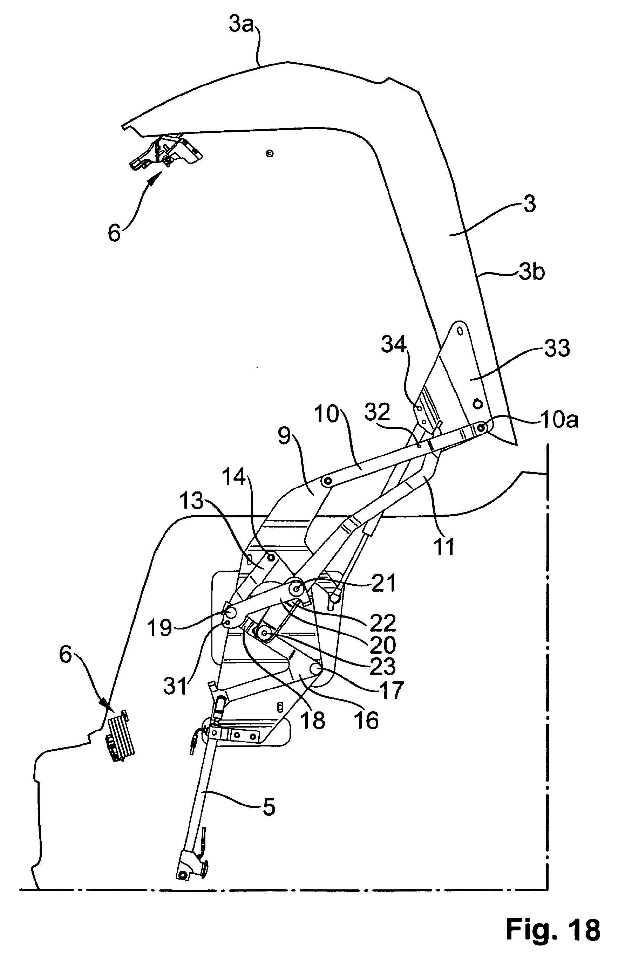

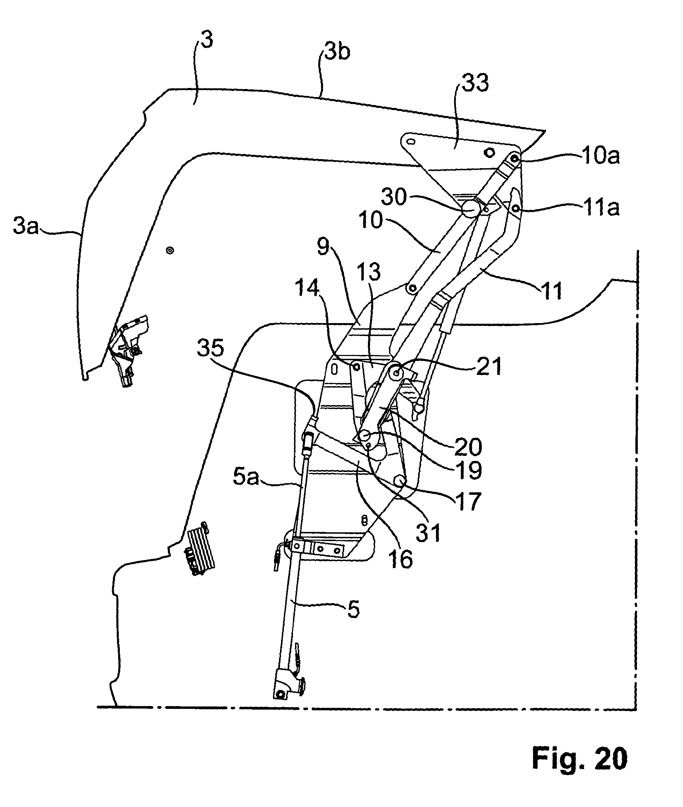

Für beide geschilderte Bewegungen kann sich der Deckelteil im Normalbetriebsmodus befinden. Eine zusätzliche Möglichkeit einer manuellen Notbetätigung ist in den Figuren 18 bis 21 dargestellt und wird weiter unten noch näher beschrieben.

An Stelle des hier dargestellten Deckelteils 3 kann zusätzlich oder alternativ auch beispielsweise eine Hutablage mit einer solchen Notbetätigungsmöglichkeit versehen sein.

Das Getriebe 4 umfasst gemäß dem in der Zeichnung dargestellten Ausführungsbeispiel einen karosseriefest gehaltenen Rahmen 9, von dem aus zu dem Deckelteil 3 zwei Lenker 10, 11 nach Art eines Parallelogramms erstreckt sind und am Deckelteil 3 über Gelenke 10a bzw. 11a angreifen. Der obere Lenker 10 ist mit seinem dem Deckelteil 3 abgewandten Ende direkt an dem festen Rahmen 9 schwenkbeweglich gelagert. Der untere Lenker 11 ist hingegen am mehr oder weniger mittig an diesem gelegenen Gelenk 12 an einem Schenkel eines dahinter liegenden, ungefähr boomerangförmigen Lenkers 13 gehalten, der seinerseits über das Gelenk 14 am Rahmen 9 schwenkbar gelagert ist. Alle Gelenke des Getriebes 4 haben quer zum Fahrzeug 1 und parallel zueinander gelegene Schwenkachsen.

Für das Öffnen des Deckelteils 3 im Sinne der Figuren 2 bis 7 zur Freigabe der Durchtrittsöffnung für das Dach 2 wird der Lenker 13 in Richtung des Pfeils 15 um sein karosseriefestes Gelenk 14 verschwenkt. Hierfür wird der Hebel 13 von einem ebenfalls boomerangförmigen und mit der Kolbenstange 5a des Antriebs 5 direkt beaufschlagbaren Steuerhebel 16 beaufschlagt, der durch Ausschub der Kolbenstange 5a um sein karosseriefestes Lager 17 gemäß der Darstellung Zeichnung im Uhrzeigersinn verschwenkbar ist und dabei einen an seinem der Kolbenstange 5a abgewandten Schenkel gelagerten Zwischenhebel 18 mitzieht.

Dieser Zwischenhebel 18 steht am Gelenk 19, wie insbesondere in Fig. 18 zu erkennen ist, einerseits in direkter Schwenkverbindung zum Hebel 13, und zwar an dessen dem Gelenk 12 abgewandten Schenkel. Ein Zug über den Zwischenhebel 18 über das Gelenk 19 bewirkt daher direkt die Drehung des boomerangförmigen Lenkers 13 um sein Gelenk 14 in Richtung des Pfeils 15.

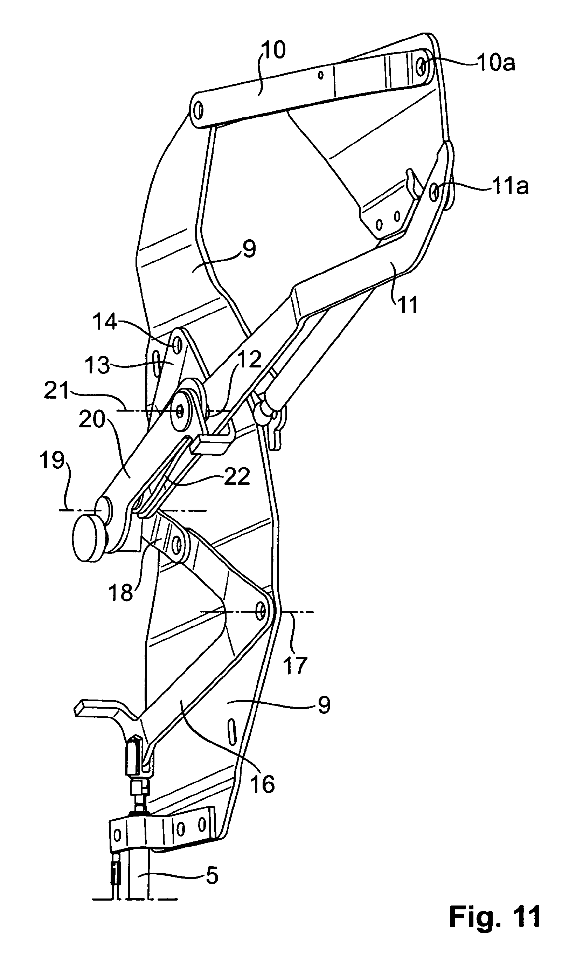

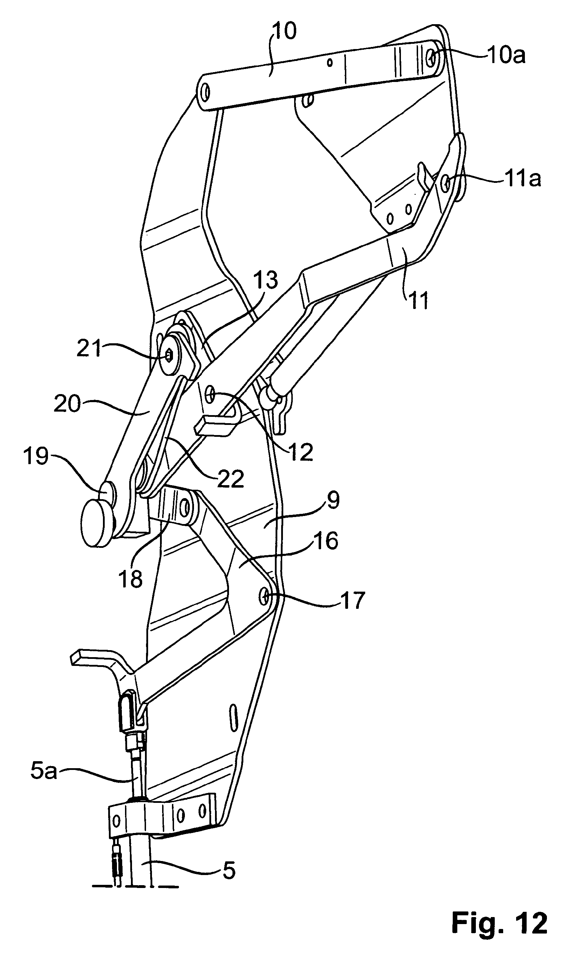

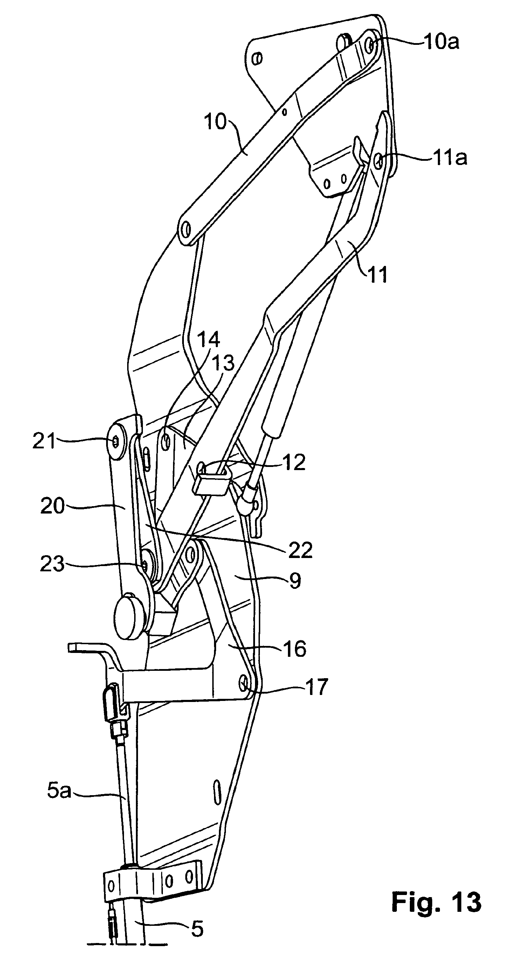

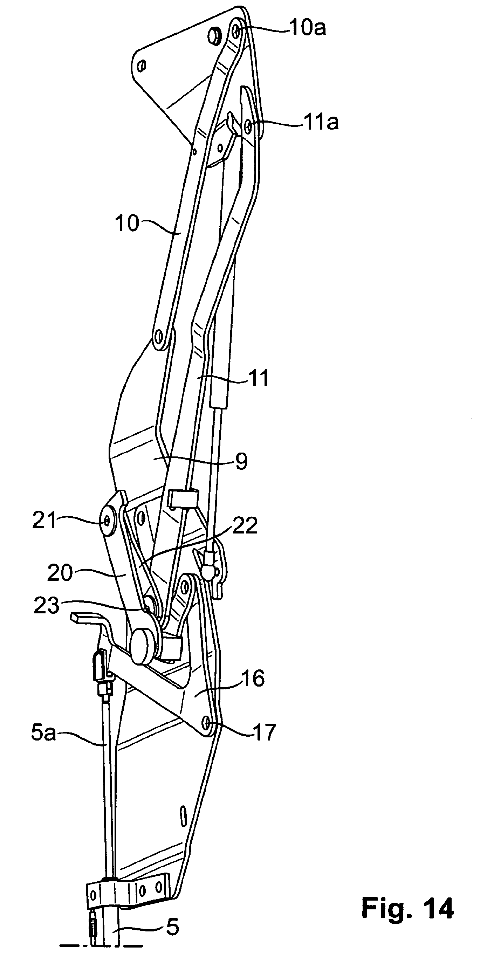

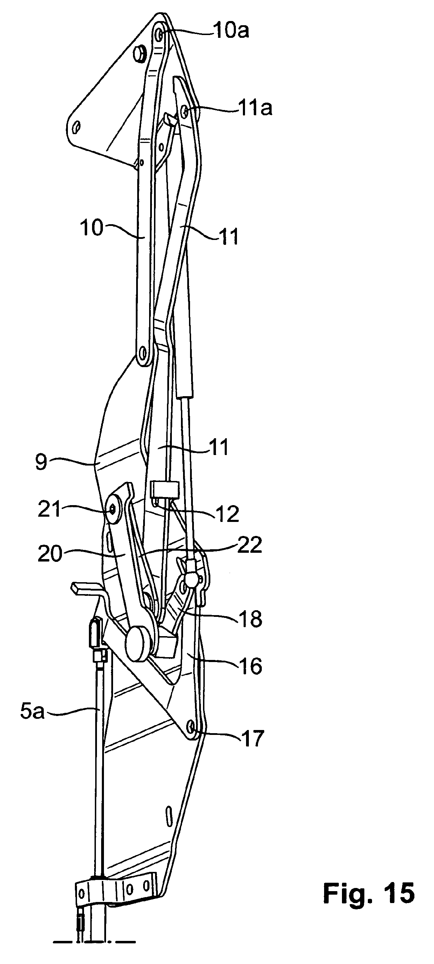

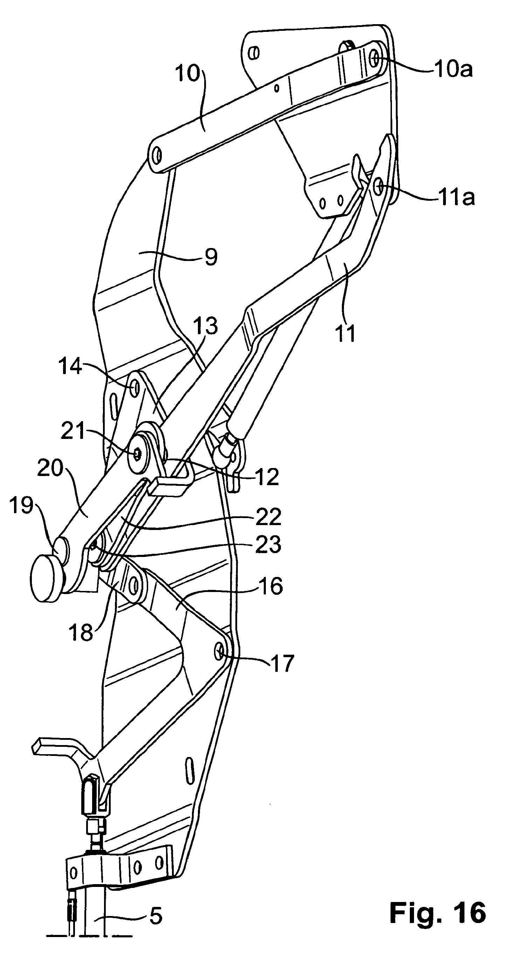

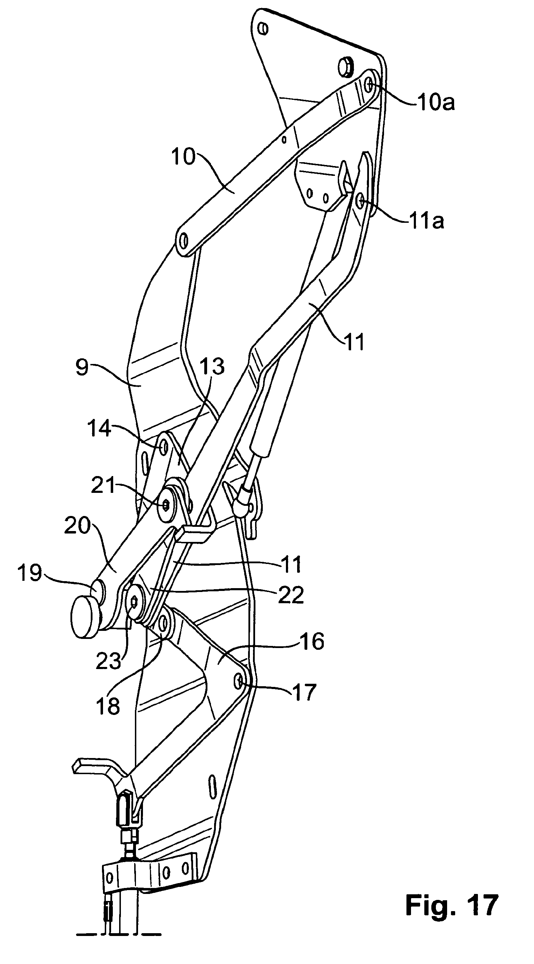

Andererseits steht der Zwischenhebel 18 am Gelenk 19 auch noch in Verbindung mit einem zweiten, im wesentlichen geradlinigen Lenker 20, der keine karosseriefeste Lagerung aufweist, sondern mit seinem dem Gelenk 19 gegenüber liegenden Ende am Gelenk 21 mit einem ungefähr parallel und mehr oder weniger deckungsgleich dahinter liegenden weiteren Lenker 22 verbunden ist. Die Winkelstellung zwischen dem Zwischenhebel 18 und dem Lenker 20 ist im Normalbetriebsmodus (Fig. 1 bis Fig. 17) über eine Sicherungseinheit 30 fixiert, d. h., dass sich die Hebel 20 und 18 nur gemeinsam bewegen und ihre Winkelstellung zueinander dabei stets gleich bleibt und das Gelenk 19 nur zum gemeinsamen Verschwenken dieser Lenker 18, 20 dient.

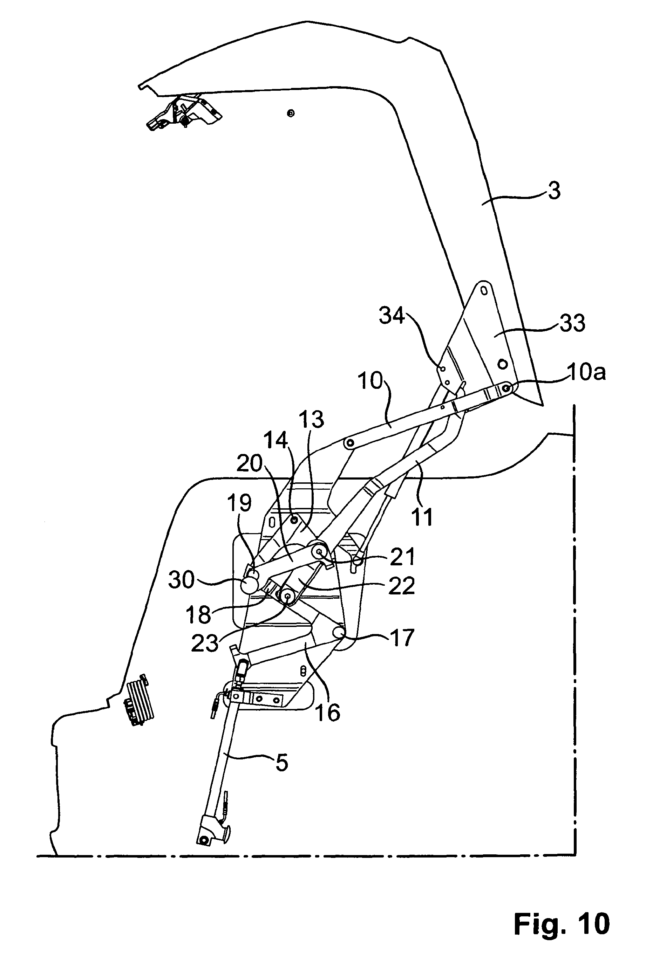

Die Sicherungseinheit 30 ist hier beispielhaft als mit einem großen und von Hand bedienbaren Kopf versehene und einteilige Schraube ausgebildet und kann zum Beispiel in der zur Freigabe der Ladeöffnung für Gepäck geöffneten Stellung des Deckelteils 3 herausgedreht werden (Übergang von Fig. 10 zu Fig. 18). Hierauf wird weiter unten noch näher eingegangen.

Der oben genannte weitere Hebel 22 ist ebenfalls nicht karosseriefest gelagert, sondern steht mit seinem dem Gelenk 21 gegenüber liegenden Ende am Gelenk 23 in Schwenkverbindung mit dem unteren Lenker 11 des Parallelogramms. Diese Anlenkung 23 liegt an einem der Deckelteilanbindung 11a gegenüber gelegenen Ende dieses Lenkers 11. Über den Zwischenhebel 18 wird daher die Aufstellbewegung des Lenkers 11 bewirkt, der über das Gelenk 11a am vorderen Ende des Deckelteils 3 angreift und dieses dabei aufstellt.

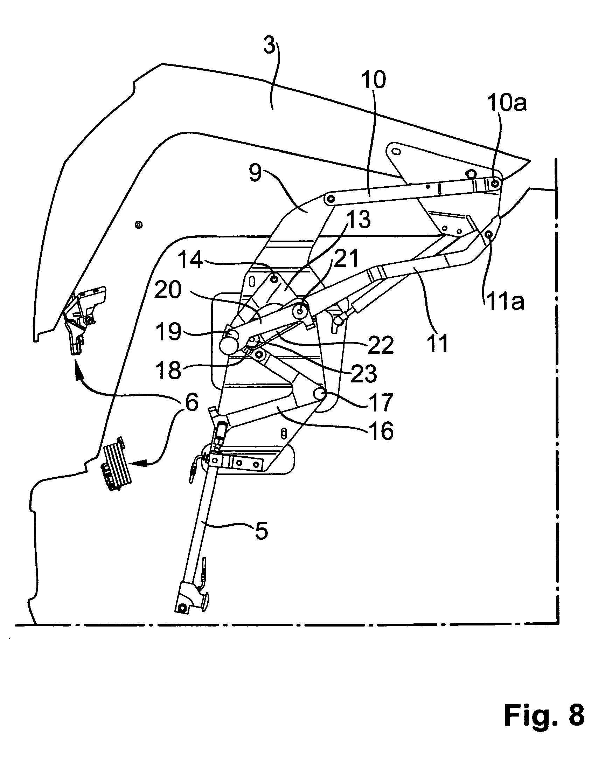

Wie in den Figuren 2 bis 7 deutlich wird, verändern die Lenker 20 und 22 ihre Lage zueinander während der Deckelteilöffnung zur Freigabe einer Durchtrittsöffnung für das Dach 2 nicht oder nur wenig, verschwenken jedoch bei gegensinniger Öffnung (Fig.8 bis Fig. 10) deutlich gegeneinander. Dann ist die Hemmung der Bewegung dieser Lenker 20, 22 gegeneinander aufgehoben, so dass sie um das Gelenk 21 gegeneinander öffnen. Der Winkel zwischen den Lenkern 18 und 20 bleibt jedoch auch bei dieser Öffnung im Normalbetriebsmodus durch die Sicherungseinheit 30 gesperrt.

Im Normalbetriebsmodus wirken aufgrund ihrer Sperrung gegeneinander die Lenker 18 und 20 wie ein gemeinsamer, starrer Lenker.

Aus der Schließstellung des Getriebes 4 sind im Normalbetriebsmodus zwei unterschiedliche Getriebebewegungsabläufe ermöglicht: zum einen der zur Freigabe der Durchtrittsöffnung für das Dach 2, bei dem die Lenker 20 und 22 gegeneinander mehr oder weniger unbewegt bleiben, zum anderen den zur Freigabe der Ladeöffnung für Gepäck, bei dem die Hebel 20 und 22 gegeneinander verschwenken. Aus der Schließstellung des Getriebes 4 ist daher gegenüber dem hier einen Freiheitsgrad des Getriebes 4 ein zusätzlicher Freiheitsgrad zur Ermöglichung eines zweiten Bewegungsablaufs ermöglicht. Diese Schließstellung bildet somit eine Verzweigungsstellung aus. Auch wenn das Getriebe 4 ohnehin mehrere Freiheitsgrade hatte, wird durch die Verzweigungsstellung ein weiterer Freiheitsgrad erreicht.

Hier weist das Getriebe 4 außerhalb der Verzweigungsstellung einen Gesamtfreiheitsgrad von 1 auf und erhält durch die genannte Verzweigungsstellung - hier die Schließstellung - einen zweiten Freiheitsgrad.

In der Schließstellung ist der Deckelteil 3 allein in dem hinteren Schloss 6 zur Verhinderung einer Öffnung zur Freigabe einer Ladeöffnung für Gepäck an der Karosserie verriegelt und eine gegensinnige Aufbewegung des Deckelteils zur Freigabe einer Durchtrittsöffnung für das Dach durch die blockierende Winkelstellung innerhalb des Getriebes 4 verhindert. Dadurch wird es nötig, einen manuellen Notbetrieb zu ermöglichen, der neben diesen beschriebenen beiden Öffnungsbewegungen des Normalbetriebsmodus entgegen der Blockade der Öffnung - zum Beispiel bei Ausfall des Antriebs 5 - die Möglichkeit eröffnet, den Deckelteil 3 in eine Offenstellung zu bringen, die es erlaubt, das Dach 2 öffnen oder, was wichtiger ist, schließen zu können.

Sofern beispielsweise bei Ausfall des Antriebs 5 der Deckelteil 3 geschlossen ist, kann dieser zunächst in üblicher Weise, eventuell unterstützt durch eine Gasdruckfeder o. ä., manuell nach Lösen des Schlosses 6 in die Offenstellung zur Freigabe der Ladeöffnung aufgeschwenkt werden (Fig. 10).

Die oben beschriebene Sicherungseinheit 30, die im Normalbetriebsmodus die Bewegung der Lenker 18 und 20 gegeneinander hemmt, kann dann zum Ermöglichen einer manuellen Beweglichkeit des Getriebes 4 aus ihrer im Normalbetriebsmodus hemmenden Funktion entfernt werden, hier durch Herausdrehen der Schraube an ihrem gut greifbaren Kopf. Dieses ist in Fig. 18 dargestellt, in der die Gewindebohrung 31 nach Herausdrehen der Schraube 30 von quer innen zu sehen ist. Damit ist dann eine Schwenkbeweglichkeit des Lenkerpaars 18 und 20 gegeneinander um das verbindende Gelenk 19 ermöglicht, so dass das Getriebe 4 für die manuelle Notbetätigung zunächst einen Freiheitsgrad gewinnen würde. Um eine Unterbestimmung zu vermeiden, ist jedoch hier die aus der ersten Stellung entfernte Sicherungseinheit 30 zum Ermöglichen der manuellen Beweglichkeit an eine andere Stelle des Getriebes 4, nämlich in die weitere Gewindebohrung 32 im Lenker 10, in eine Hilfsstellung einsetzbar.

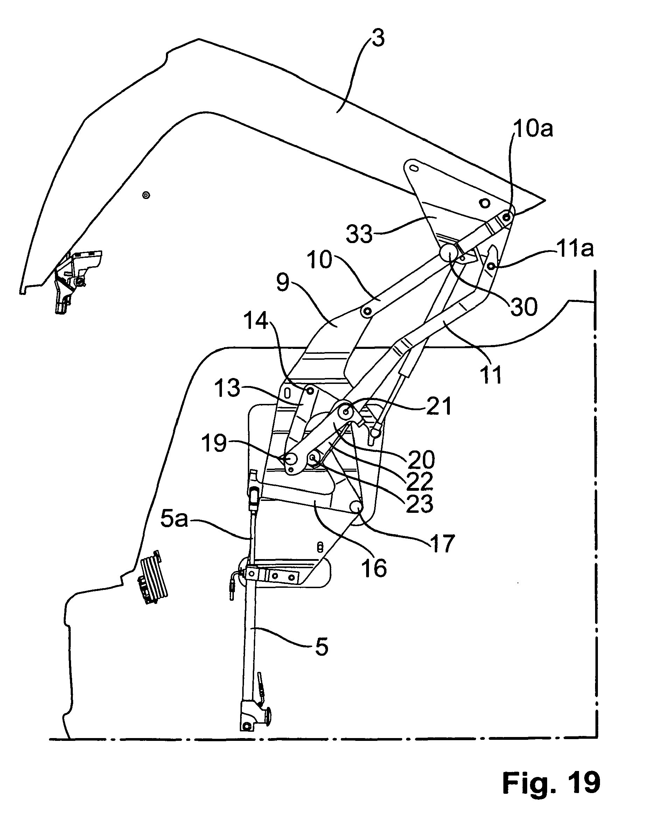

Dort führt die Sicherungseinheit 30 dann eine andere hemmende Funktion aus, sie sperrt nämlich den Lenker 10 gegen den Deckelteil 3. Um dies aus der Stellung nach Fig. 18 erreichen zu können, wird zunächst manuell der Deckelteil 3 ein Stück weit zubewegt (Fig. 19), bis die Gewindebohrung 32 des Lenkers 11 und eine weitere, an einem festen, aufrechten Flansch 33 des Deckelteils 3 angeordnete Bohrung 34 deckungsgleich voreinander liegen. Die Schraube 30 kann dann in Hilfsstellung beide Bohrungen 32, 34 durchdringen und die Teile 10 und 3 dadurch gegeneinander sperren.

Die Hemmung der Bewegung in Hilfsstellung ist daher die Blockade der Schwenkbewegung des weiteren Lenkers 10 um sein deckelseitiges Schwenkgelenk 11a, so dass im Normalbetriebsmodus die Hemmung der Bewegung von Lenkern 18;20 eine Blockierung ihrer Relativbewegung um das gemeinsame Gelenk 19 ist, in der Hilfsstellung hingegen die Schraube 30 die Bewegung des Lenkers 10 gegenüber dem Deckelteil 3 blockiert.

Dabei kann die Sicherungseinheit 30, wie oben dargestellt, in ihre hemmende Stellung für den Normalbetriebsmodus von quer innen nach außen in das Getriebe 4, nämlich in die Bohrung 31, einsetzbar sein. Das Ein- und Ausschrauben kann dann unter dem (Regen-)Schutz des geöffneten Deckelteils 3 vorgenommen werden.

Anders, als hier dargestellt, kann die Sicherungseinheit 30 in ihre Hilfsstellung auch von quer außen nach innen in das Getriebe 4, nämlich in die Bohrungen 32 und 34, einsetzbar sein. Dadurch muss sich eine bedienende Person nicht so weit in den Kofferraum hineinbeugen, um an die Bohrungen 32 und 34 heranzukommen, sondern kann diese bequem aufrecht stehend von außen erreichen.

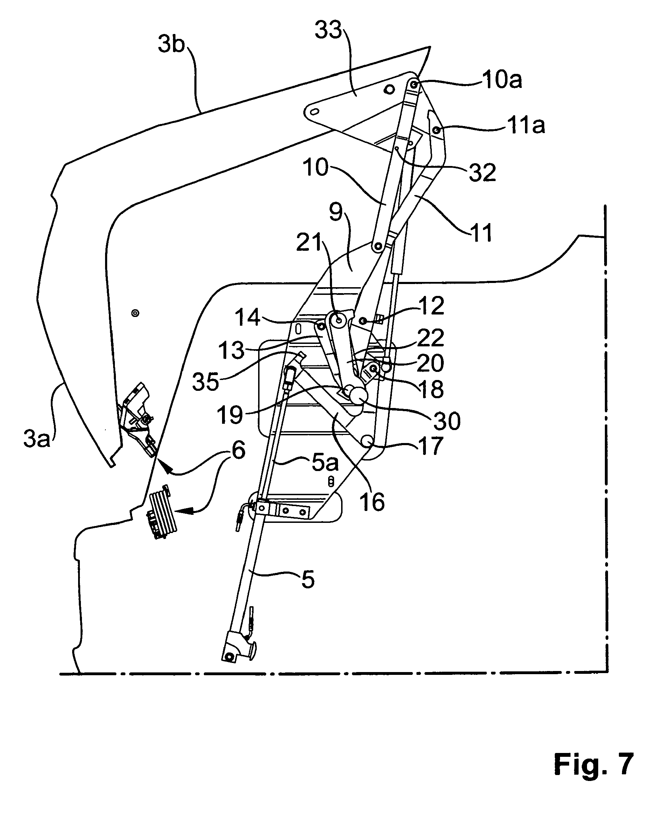

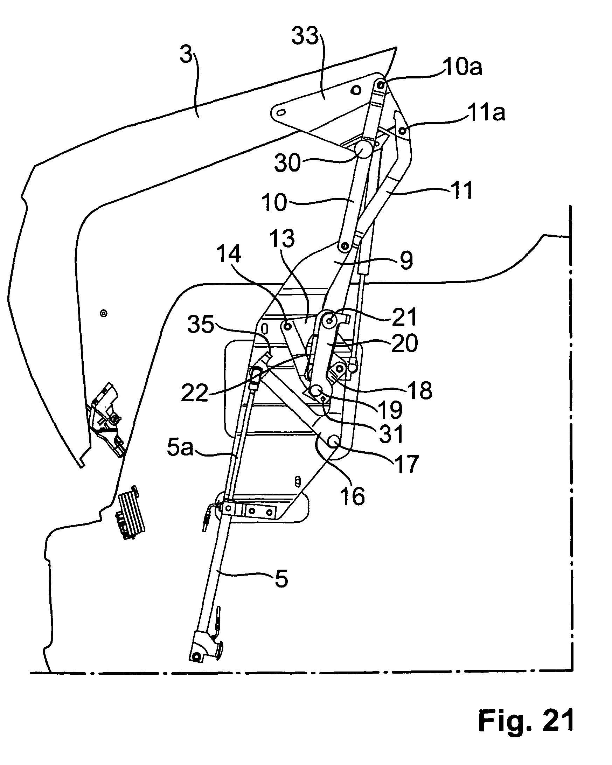

Nach Einsetzen der Sicherungseinheit 30 in ihre Hilfsstellung (Bohrungen 32, 34) kann, wie im Ablauf von Fig. 19 zu Fig. 21 dargestellt ist, die Kolbenstange 5a an einem quer vorragenden Ansatz 35 gegriffen und herausgezogen werden, so dass der Deckelteil 3 über Vermittlung durch das Schwenken des Lenkers 16 um sein Gelenk 17 in die gleiche Offenstellung wie in Fig. 7 zur Freigabe der Durchtrittsöffnung für das Dach 2 gelangt - diesmal jedoch in manueller Notbetätigung aus der Öffnungsstellung zur Freigabe der Ladeöffnung für Gepäck heraus, ohne den Umweg über die geschlossene Stellung.

In dieser Deckelteilstellung kann dann wie in Fig. 7 das Dach 2 geöffnet oder insbesondere geschlossen werden.

Um anschließend den Deckelteil 3 ebenfalls im Notbetrieb schließen zu können, wird der Bewegungsablauf der Figuren 18 bis 21 zunächst umgekehrt durchlaufen: zunächst wird der Deckelteil bei in Hilfsstellung befindlicher Sicherungseinheit 30 durch Niederdrücken der Kolbenstange 5a direkt ungefähr in die gegensinnige Öffnungsstellung zur Freigabe der Ladeöffnung für Gepäck rücküberführt (Fig. 19), anschließend die Sicherungseinheit 30 umgesetzt und dabei der Deckelteil in die völlig geöffnete Position weiter aufgeschwenkt (Fig. 18). Dann kann in üblicher Weise manuell der Deckelteil wie eine Kofferraumklappe wieder geschlossen werden, um die Fahrt fortzusetzen. Die Kofferraumfunktion ist unbeeinträchtigt, so dass in dieser Stellung auch bei Verzicht auf ein automatisches Deckelteilöffnen oder - schließen zur Freigabe der Durchtrittsöffnung für das Dach die Fahrt und Ladetätigkeiten ohne weitere Einschränkungen fortgesetzt werden können.

## Patentansprüche

1. Cabriolet-Fahrzeug (1) mit einem auf- und zubeweglichen Deckelteil zur zumindest teilweisen Abdeckung eines karosserieseitigen Aufnahmeraums für ein in eine Offenstellung bewegtes Dach oder einen Dachteil des Fahrzeugs, wobei die Auf- und Zubewegung des Deckelteils (3) über zumindest ein in einem Normalbetriebsmodus bewegbares Getriebe (4) vermittelbar ist, das neben seiner Beweglichkeit im Normalbetriebsmodus zumindest für eine Notbetätigung manuell bewegbar ist,
**dadurch gekennzeichnet,**
**dass** das Getriebe (4) im Normalbetriebsmodus zumindest eine Sicherungseinheit (30) umfasst, die eine Bewegung von Teilen (18;20) des Getriebes (4) gegeneinander hemmt, und diese Sicherungseinheit (30) zum Ermöglichen einer manuellen Beweglichkeit des Getriebes (4) aus ihrer im Normalbetriebsmodus hemmenden Funktion entfernbar ist.

2. Cabriolet-Fahrzeug (1) nach Anspruch 1,
**dadurch gekennzeichnet,**
**dass** die Sicherungseinheit (30) zum Ermöglichen der manuellen Beweglichkeit an eine andere Stelle (32;34) des Getriebes (4) in eine Hilfsstellung einsetzbar ist und dort eine andere hemmende Funktion ausführt.

3. Cabriolet-Fahrzeug (1) nach einem der Ansprüche 1 oder 2,
**dadurch gekennzeichnet,**
**dass** die Sicherungseinheit (30) im Normalbetriebsmodus die Bewegung von zwei in Abwesenheit der Sicherungseinheit (30) miteinander beweglich verbundenen Lenkern (18;20) des Getriebes (4) gegeneinander hemmt.

4. Cabriolet-Fahrzeug (1) nach Anspruch 3,
**dadurch gekennzeichnet,**
**dass** die Hemmung der Bewegung im Normalbetriebsmodus die Hemmung einer Schwenkbewegung eines Lenkerpaars (18;20) um ein sie verbindendes Schwenkgelenk (19) ist.

5. Cabriolet-Fahrzeug (1) nach einem der Ansprüche 3 oder 4,
**dadurch gekennzeichnet,**
**dass** die Sicherungseinheit (30) in Hilfsstellung die Bewegung von zwei weiteren in Abwesenheit der Sicherungseinheit (30) miteinander beweglich verbundenen Teilen (10;3) des Getriebes (4) gegeneinander hemmt.

6. Cabriolet-Fahrzeug (1) nach Anspruch 5,
**dadurch gekennzeichnet,**
**dass** die Hemmung der Bewegung in Hilfsstellung die Hemmung einer Schwenkbewegung eines weiteren Lenkers (10) um ein Schwenkgelenk (10a) ist.

7. Cabriolet-Fahrzeug (1) nach einem der Ansprüche 1 bis 6,
**dadurch gekennzeichnet,**
**dass** die Hemmung der Bewegung von Lenkern (18;20 bzw. 10) eine Blockierung dieser (Relativ-)Bewegung ist.

8. Cabriolet-Fahrzeug (1) nach einem der Ansprüche 1 bis 7,
**dadurch gekennzeichnet,**
**dass** die Sicherungseinheit (30) in zumindest eine hemmende Position (31 bzw. 32;34) manuell einschraubbar ist.

9. Cabriolet-Fahrzeug (1) nach einem der Ansprüche 1 bis 7,
**dadurch gekennzeichnet,**
**dass** die Sicherungseinheit (30) in ihre hemmende Stellung für den Normalbetriebsmodus von quer innen nach außen in das Getriebe (4) einsetzbar ist.

10. Cabriolet-Fahrzeug (1) nach einem der Ansprüche 1 bis 9,
**dadurch gekennzeichnet,**
**dass** die Sicherungseinheit in ihre hemmende Stellung (32;34) für die manuelle Bewegung von quer außen nach innen in das Getriebe (4) einsetzbar ist

11. Cabriolet-Fahrzeug (1) nach einem der Ansprüche 1 bis 10,
**dadurch gekennzeichnet,**
**dass** der Deckelteil (3) in einem ersten Öffnungssinn zur Freigabe einer Durchtrittsöffnung für ein bewegliches Dach (2) oder Dachteil des Fahrzeugs (1) und in einem zweiten Öffnungssinn zur Freigabe einer Ladeöffnung für Gepäck aufbewegbar ist

12. Cabriolet-Fahrzeug (1) nach einem der Ansprüche 1 bis 11,
**dadurch gekennzeichnet,**
**dass** das Getriebe (4) eine momentane Winkelstellung ermöglicht, aus der heraus ein gegenüber dem oder den Freiheitsgrad(en) des Getriebes (4) zusätzlicher Freiheitsgrad zur Ermöglichung eines weiteren Bewegungsablaufs ermöglicht ist.

13. Cabriolet-Fahrzeug (1) nach Anspruch 12,
**dadurch gekennzeichnet,**
**dass** außerhalb der momentanen Winkelstellung nach Anspruch 12 Lenker (20;22) in ihrer Bewegung gegeneinander allein durch die Lage von Lenkern (13;16;20;22) und Gelenken (12;17;19;21;23) des Getriebes (4) blockiert sind.

14. Cabriolet-Fahrzeug (1) nach Anspruch 11 bis 13,
**dadurch gekennzeichnet,**
**dass** das Getriebe (4) außerhalb der genannten momentanen Winkelstellung, die eine Verzweigungsstellung darstellt, einen Gesamtfreiheitsgrad von 1 aufweist und in der genannten Winkelstellung einen zweiten Freiheitsgrad erhält.

15. Cabriolet-Fahrzeug (1) nach einem der Ansprüche 11 bis 14,
**dadurch gekennzeichnet,**
**dass** die Verzweigungsstellung eine Schließstellung des Deckelteils (3) ist.
